(19) Europäisches Patentamt European Patent Office Office européen des brevets

(11) **EP 2 661 834 B1**

(12) **EUROPEAN PATENT SPECIFICATION**

(45) Date of publication and mention
of the grant of the patent:
**04.05.2016 Bulletin 2016/18**

(51) Int Cl.:
***H04K 1/00*** *(2006.01)* ***G06F 7/38*** *(2006.01)*

(21) Application number: **12742319.2**

(86) International application number:
**PCT/CN2012/070869**

(22) Date of filing: **03.02.2012**

(87) International publication number:
**WO 2012/103816 (09.08.2012 Gazette 2012/32)**

(54) **A DESIGN OF A GOOD GENERAL-PURPOSE HASH FUNCTION WITH LIMITED RESOURCES**

ENTWURF EINER HASH-FUNKTION MIT BEGRENZTEN RESSOURCEN UND GUTEM ALLGEMEINEM ZWECK

CONCEPTION D'UNE BONNE FONCTION DE HACHAGE POLYVALENTE AVEC DES RESSOURCES LIMITÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.02.2011 US 201161439234 P**
**17.01.2012 US 201213351704**

(43) Date of publication of application:
**13.11.2013 Bulletin 2013/46**

(73) Proprietor: **Huawei Technologies Co., Ltd.**
**Longgang District**
**Shenzhen, Guangdong 518129 (CN)**

(72) Inventors:
• **HUA, Nan**
**Atlanta, Georgia 30332 (US)**
• **NORIGE, Eric**
**Santa Clara, California 95051 (US)**
• **KUMAR, Sailesh**
**San Jose, California 95059 (US)**
• **LYNCH, William Lee**
**Los Altos, California 94022 (US)**

(74) Representative: **Thun, Clemens**
**Mitscherlich PartmbB**
**Patent- und Rechtsanwälte**
**Sonnenstraße 33**
**80331 München (DE)**

(56) References cited:
**WO-A2-03/067364       CN-A- 101 169 776**
**CN-A- 101 242 265       US-A1- 2003 086 564**

**US-A1- 2003 196 026       US-A1- 2004 260 740**
**US-A1- 2006 153 382       US-A1- 2006 153 382**

• ELBIRT A J ET AL: "AN FPGA IMPLEMENTATION AND PERFORMANCE EVALUATION OF THE SERPENT BLOCK CIPHER", FPGA'00. ACM/SIGDA INTERNATIONAL SYMPOSIUM ON FIELD PROGRAMMABLE GATE ARRAYS. MONTEREY, CA, FEB. 9 - 11, 2000; [ACM/SIGDA INTERNATIONAL SYMPOSIUM ON FIELD PROGRAMMABLE GATE ARRAYS], NEW YORK, NY : ACM, US, vol. CONF. 8, 9 February 2000 (2000-02-09) , pages 33-40, XP000970731, DOI: 10.1145/329166.329176 ISBN: 978-1-58113-193-2
• Xuejia Lai ET AL: "On the Design and Security of Block Ciphers A dissertation submitted to the SWISS FEDERAL INSTITUTE OF TECHNOLOGY ZURICH for the degree of Doctor of Technical Sciences presented by Hartung-Gorre Verlag Konstanz Acknowledgements", Dr. J. L. Massey, referee Prof. Dr. H. Biihlmann, 1 January 1992 (1992-01-01), XP055123989, Retrieved from the Internet: URL:http://e-collection.library.ethz.ch/es erv/eth:38650/eth-38650-02.pdf [retrieved on 2014-06-18]
• Principal Submitter ET AL: "AES-hash", , 2 March 2001 (2001-03-02), XP055124804, Retrieved from the Internet: URL:http://csrc.nist.gov/groups/ST/toolkit /BCM/documents/proposedmodes/aes-hash/aes h ash.pdf [retrieved on 2014-06-23]

**(Cont. next page)**

- STANDAERT FRANÇOIS-XAVIER ET AL: "SEA: A Scalable Encryption Algorithm for Small Embedded Applications", 19 April 2006 (2006-04-19), ADVANCES IN COMMUNICATION NETWORKING : 20TH EUNICE/IFIP EG 6.2, 6.6 INTERNATIONAL WORKSHOP, RENNES, FRANCE, SEPTEMBER 1-5, 2014, REVISED SELECTED PAPERS; [LECTURE NOTES IN COMPUTER SCIENCE , ISSN 1611-3349], SPRINGER VERLAG, DE, PAGE(S) 222 - 236, XP047305474, ISSN: 0302-9743 ISBN: 978-3-540-89964-8

**Description**

A hash function is implemented to convert non-random (or not-so-random) values into uniformly distributed random numbers. The hash function is an important function in networking. Hash-based algorithms are increasingly proposed and deployed in networks, e.g., in relatively more critical and high speed components or devices. Some hash functions are implemented using software, such as the Bob Jenkin's hash and Murmurhash. Other hash functions are implemented using hardware, such as cyclic redundancy check (CRC), H3 (with fixed seed), and Pearson and Buzhash. Networking devices are increasingly dependent on probabilistic algorithms or data structures for performance. The algorithms or data structures can encounter pathological cases that can be problematic and unacceptably slow down network components or devices, e.g., routers. The problematic cases can sometime cause network failure, e.g., if triggered on multiple routers. The algorithms and data structures use hash functions to convert or reduce relatively sparse input sets into more dense and more manageable sets that can be better stored or handled in the networks. The hash functions are used to avoid at least a substantial amount of pathological cases that lead to network failure or reduced performance.

US 2003/086564 A1 discloses a cipher encryption and decryption method and an apparatus which uses a plurality of rounds. Each round contains a plurality of s-box subround, a matrix convolution and an XOR with a key. Each s-box subround has a permutation polynomial, modulo reduction and a hilo swap.

ELBIRT A J ET AL: "AN FPGA IMPLEMENTATION AND PERFORMANCE EVALUATION OF THE SERPENT BLOCK CIPHER", FPGA'00. ACM/SIGDA INTERNATIONAL SYMPOSIUM ON FIELD PROGRAMMABLE GATE ARRAYS. MONTEREY, CA, FEB. 9 - 11, 2000; [ACM/SIGDA INTERNATIONAL SYMPOSIUM ON FIELD PROGRAMMABLE GATE ARRAYS], NEW YORK, NY : ACM, US, vol. CONF. 8, 9 February 2000 (2000-02-09), pages 33-40, XP000970731, DOI: 10.1145/329166.329176 ISBN: 978-1-58113-193-2 discloses an advanced encryption standard (AES) candidate algorithm- Serpent algorithm-implemented using Field programmable Gate Arrays (FPGAs). Specifically, it is disclosed in this document that the Serpent algorithm is a 32-round substitution-permutation (SP) network operating on four 32-bit words. The algorithm encrypts and decrypts 128-bit input data via a key for 128, 192, or 256 bits in length. The Serpent algorithm consist of three main components: initial permutation IP, thirty-two rounds consisting of a round function that performs key masking, s-box substitution, and (in all but the last round) data mixing via a linear transformation, and final permutation EP. The round function of the Serpent algorithm is comprised of three basic operations - bit-wise XOR, substitution via s-box, and the linear transformation.

**SUMMARY**

In one embodiment, the disclosure includes comprising a plurality of stages that are coupled in series and configured to implement a hash function, wherein the stages comprise a plurality of XOR arrays and one or more Substitution-Boxes (S-Boxes) that comprise a plurality of parallel gates, the plurality of XOR arrays are configured to mix a plurality of input bits to provide a plurality of output bits and to implement a linear mixing function of the input bits into the output bits as a stage of a non-cryptographic hash function, the plurality of S-Box arrays that are coupled in series with the XOR arrays in a non-cryptographic hash function architecture are configured to implement a permutation and non-linear mixing function of input bits from the plurality of XOR arrays into output bits as a stage of the non-cryptographic hash function, wherein a plurality of randomly assigned groups of input bits and output bits are rotated between a plurality of corresponding stages.

In yet another embodiment, the disclosure includes a method implemented by an apparatus comprising mixing a plurality of input bits to provide a plurality of output bits using a plurality of XOR arrays that are coupled in series in a non-cryptographic hash function architecture, and providing permutation of a plurality of input bits into a plurality of output bits using a plurality of S-Box arrays that are coupled in series with the XOR arrays in a non-cryptographic hash function architecture, rotating a plurality of randomly assigned groups of input bits and output bits between a plurality of corresponding stages in the non-cryptographic hash function architecture that corresponds to the XOR arrays and the S-Box arrays.

These and other features will be more clearly understood from the following detailed description taken in conjunction with the accompanying drawings and claims.

**BRIEF DESCRIPTION OF THE DRAWINGS**

For a more complete understanding of this disclosure, reference is now made to the following brief description, taken in connection with the accompanying drawings and detailed description, wherein like reference numerals represent like parts.

FIG. 1 is a schematic diagram of an embodiment of a hash function architecture.

FIG. 2 is a schematic diagram of an embodiment of a XOR array.
FIG. 3 is a schematic diagram of an embodiment of a S-Box array.
FIG. 4 is a schematic diagram of an embodiment of a permutation scheme.
FIG. 5 is a flowchart of an embodiment of a hash function method.
FIG. 6 is a schematic diagram of an embodiment of a network unit.
FIG. 7 is a schematic diagram of an embodiment of a general-purpose computer system.

## DETAILED DESCRIPTION

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Current available hash functions, e.g., that are used in networking, may not deliver sufficient randomness, may not be suitable for sufficiently low cost implementation, or both. Disclosed herein are systems and methods to provide an improved non-cryptographic hash function, which may be a general-purpose hash function and may use limited on-chip resources. The improved hash function may be based on cascading stages or blocks of XOR arrays and/or S-Box arrays to deliver improved performance of randomness. The hash function architecture may comprise a series of stages, which may comprise XOR array and/or S-Box, as described in detail below. The improved hash function may deliver improved randomness, e.g., closer to uniform distribution, compared to current available hash functions, and hence may provide better network performance. The improved hash function may also provide lower cost implementation than current available hash functions.

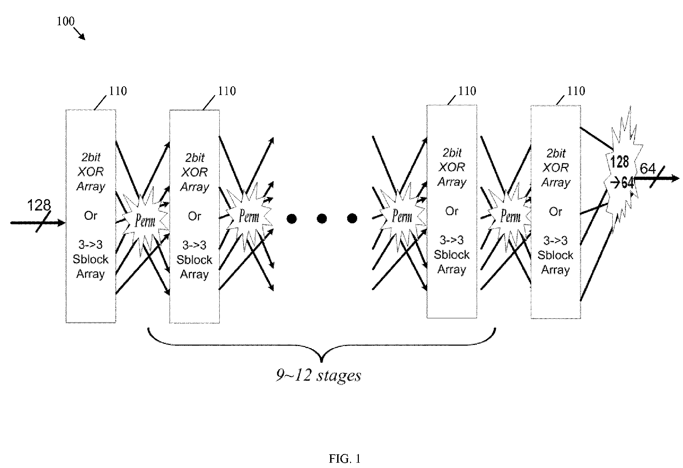

FIG. 1 illustrates an embodiment of a hash function architecture 100, which may be implemented to achieve improved randomness. The hash function architecture 100 may be implemented using hardware or, in some embodiments, using both hardware and software. In terms of hardware implementation, the hash function architecture 100 may be implemented at relatively low cost.

The hash function architecture 100 may comprise a plurality of stages 110 that may be coupled in series, as shown in FIG. 1. The hash function architecture 100 may have a fewer number of final output bits than input bits. The input bits may be received by the first stage 110 in the series and the output bits may be forwarded by the last stage 110 in the series. For instance, the hash function architecture 100 may have about 128 input bits and about 64 final output bits. In other embodiments, the hash function architecture 100 may have a different number of input bits and/or final output bits, where the number of final output bits may be smaller than the number of input bits.

The hash function architecture 100 may also have a limited number of stages 110. For example, the hash function architecture 100 may have about 12 stages 110 that may be coupled in series. In other embodiments, the number of stages may range between about nine stages and about 12 stages. The limited number of stages 110 may allow for feasible hardware implementation, such as using application-specific integrated circuits (ASICs). The limited number of stages may also limit the total process time or delay of the series of stages 110, where each stage 110 may introduce a 1-cycle delay. The wire or link (connection) delay between the stages 110 may be substantially small or negligible with respect to the 1-cycle delay of the stage 110. Thus, in the case of 12 stages, the total delay may be limited to about 12 times the 1-cycle delay.

Each of the stages 110 may comprise about one gate, which may be a linear XOR array or a non-linear S-Box array, as described below and the hash function architecture 100 may not comprise a feedback in any of the stages 110. Such features may simplify the design of the hash function architecture 100. For instance, the stages 110 may comprise a determined combination of XOR and S-Box arrays in series. Each stage 110 may process a number of input bits and provide a corresponding number of output bits. The input bits to each stage 110, except the first stage 110 in the series, may be permutations of the output bits of a previous stage 110 in the series. As such, the output bits of each stage 110, except the last stage 110 in the series, may be permuted (e.g., redistributed or remixed) and then provided as input bits to the next stage 110.

The design methodology of the hash function architecture 100 may be based on multiple guidelines. One guideline is proper mixing of the input signal or bits to the first and remaining stages 110. Accordingly, a proper amount of entropy among the input bits may be provided, which may or may not be distributed evenly among the input bits, e.g., per stage 110 and/or between stages 110. For example, a Media Access Control (MAC) address may be about 48 bits, where the first or top about 24 bits may be used to indicate the manufacturer of the device. Such portion or address space of the MAC address may be sparsely populated and companies may standardize on a relatively small number of network device manufacturers. Thus, the top bits (e.g., 24 bits) may be more predictable than the remaining or low order bits, which may be considered when determining the mixing for all the bits. A suitable hash function may be configured to properly and efficiently mix the input bits (at each stage 110), and thus provide an improved (substantially random) final output (from the last stage 110). An efficient or improved hash function may establish substantial mixing of the input bits using the available (hardware) resources, e.g., as much as possible.

Another guideline for providing a proper hash function is using invertible mapping. Invertible mapping may comprise about the same number of input bits and output bits. Using invertible mappings may allow for more time to mix the entropy of the input bits among the output bits. For instance, if collisions are created early in the hash function, entropy may be lost without having a chance to mix that entropy into other bits. Using an invertible mapping at each step may guarantee reduced or no loss of entropy, and thus reduced or no algorithm-induced collisions. This may improve chances that uniform input is mapped to uniform output, as every part of the output space may be used.

Typically, hardware based hash functions may have direct control of values on the bit level and may have access to simpler building blocks, e.g., in comparison to software hash functions, which may be arranged in parallel. In hardware, bits may correspond to wires, and thus shuffling the bits of a value in a fixed pattern may be achieved by routing the wires representing that value to different locations. Relatively complex operations, such as integer multiplication and addition, may be too costly to include in a hardware hash functions. Bit-wise operations, such as XOR, may be organized properly to mix the bits, where operations may be performed in parallel. Hardware hash performance may be measured in area (related to the number of gates and wires) and timing, which may depend on the wire length and the number of gates, e.g., on the longest path (the complete number of stages 110) from an input bit to an output bit.

In the hash function architecture 100, the stages 110 may be arranged in series to implement alternating bit mixing and permutation sequences. This design may be similar to a cryptographic substitution-permutation-network without key bits being merged at each round. Each component may be designed to be invertible, e.g., to avoid bias and losing input entropy. Additionally, the ratio of benefit to cost may be improved or maximized in each round (stage 110). A sufficient number of rounds (stages 110) may be used to achieve sufficient or substantial bit mixing

Building a substantially large mixing function may be achieved by placing gates in random looking patterns. However, such arrangement may include non-invertible components. Instead, linear functions (XOR arrays) may be used, which may be easily invertible. Linear functions may also provide relatively good mixing, although such functions may not cause any avalanche. The avalanche property may be achieved when each output bit is the non-linear mixing of every input bit. Further, building a substantially large single stage to mix all the input bits (e.g., about 128 input bits) simultaneously may have substantially high cost. Instead, since a single mixing function's size may be at least cubic in the number of bits to be mixed, a relatively low cost round (stage 110) may be used to mix bits in smaller batches (fewer than the total number of input bits). In exchange, multiple rounds may be needed for thorough mixing of all the input bits (e.g., 128 bits) into all the output bits (e.g., 64 bits).

Using multiple rounds or stages 110 and mixing bits in small clusters (of rounds), instead of using one substantially large mixing stage, may achieve relatively good avalanche properties with substantially lower costs. As such, the bits may be permuted in between rounds, e.g., so that bits may be mixed with different bits (at different rounds). Using some non-linear mixing (S-Box arrays) at a substantially small cost, operations may be repeated over many rounds to achieve a substantially complete avalanche at relatively low cost. Each mixing round or stage 110 may correspond to a linear XOR array or a non-linear S-Box array. Permutation rounds may be achieved using efficient hardware implementation of substantially large bit permutation functions by distributing and arranging wires appropriately between the stages 110. Efficient implementation may be evaluated using two metrics, cost (measured in area and delay) and diffusion (the spreading of input entropy to multiple bits). More details about implementing the features of the hash function architecture 100 are described below.

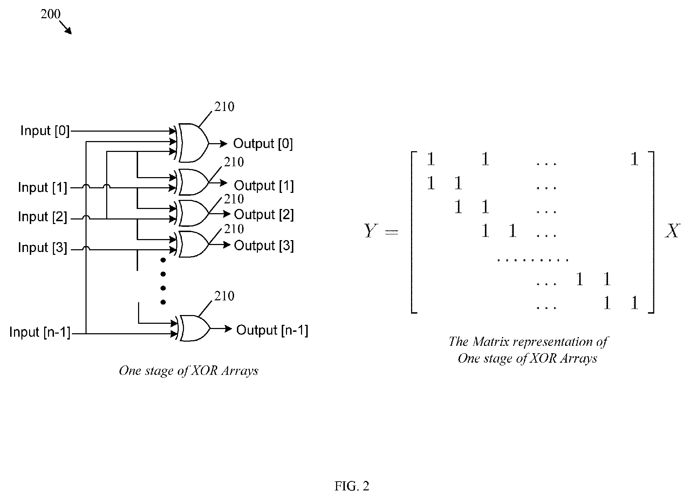

FIG. 2 illustrates an embodiment of a XOR array 200, which may be used as one or more stages 110 in the hash function architecture 110. The XOR array 200 may be substantially implemented using hardware. The XOR array 200 may comprise a plurality of XOR gates 210, which may be arranged in parallel as shown in FIG. 2. The XOR array may be a relatively simple circuit that may mix input bits. The XOR gate 210 may be a 3-input XOR gate or a 2-input XOR gate, as shown in FIG. 2. Specifically, the XOR array 200 may comprise about one 3-input XOR gate 210 and a plurality of remaining 2-input XOR gates 210. The total number of XOR gates 210 may depend on the number of input bits allocated for the stage corresponding to the XOR array 200, e.g., a stage 110 in the hash function architecture.

The XOR array may implement a substantially sparse invertible matrix multiplier for an input matrix (X) to obtain an output matrix (Y). The input matrix corresponds to the input bits and the output matrix corresponds to the output bits. The equivalent matrix representation of the XOR array 200 operation is also shown in FIG. 2. The XOR array 200 operation may correspond to implementing the XOR function on adjacent input bits (Input [0], Input [1], ..., Input [n-1], where n is an integer that represents the total number of XOR gates 210). One 3-input XOR gate 210 may be used in each XOR array 200 (in each stage 110) to obtain a mapping that may be invertible. If only 2-input XOR gates 210 are used in the XOR array 200, then any resulting combination of XOR gates 210 may be non-invertible. If a one 1-input XOR gate (also known as a wire) is used in the XOR array 200, then the corresponding input bit may become less mixed, which may result in poor mixing that may carry to the last stage in the hash function architecture. The XOR array 200 may not have any avalanche property, but may have substantially low cost and may mix bits efficiently (for that cost). Using more 3-input XOR gates may allow for a denser matrix, but the gate size may double (reach about 2x or twice the size) and the gate delay may also increase by about 60 percent. The complexity of routing may also increase since more non-adjacent bits may be needed. A similar cost and perhaps better mixing may be achieved from using two smaller stages of 2-input XOR gates instead of a 3-input XOR gate.

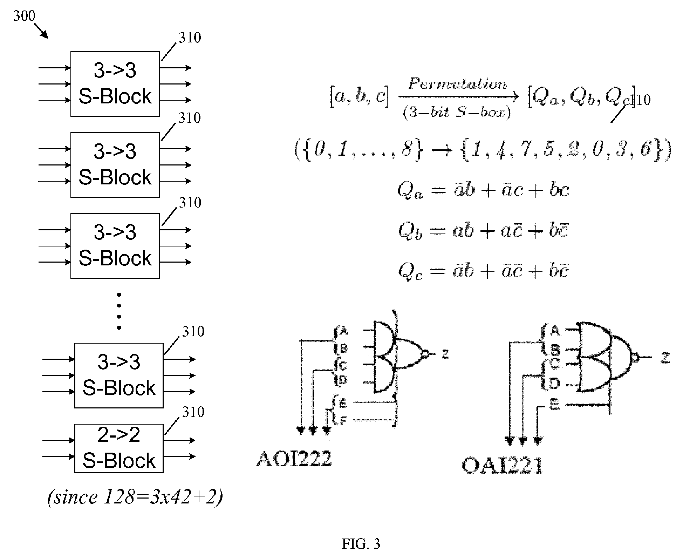

The XOR arrays may relatively quickly propagate bit changes but may not provide non-linearity. A hash function built using only XOR arrays may have poor avalanche property, poor random performance, and may be vulnerable to attacks. One way to avoid this pitfall is to use nonlinear block-to-block permutations, known as the S-Box in cryptographic context. FIG. 3 illustrates an embodiment of a S-Box array 300, which may be used as one or more stages 110 in the hash function architecture 110. The S-Box array 300 may be substantially implemented using hardware. The S-Box array 300 may comprise a plurality of S-Boxes 310, also referred to herein as S-Blocks, which may be arranged in parallel as shown in FIG. 3.

An $\rightarrow$ n S-box may be considered as a permutation function on values $0 - 2^n$, which may get an n-bit value and return a n-bit value. Ignoring implementation considerations, a single $128 \rightarrow 128$ S-box may be used for the hash function and achieve substantially good hashing, e.g., by selecting an appropriate permutation of input values (input bits). However, building such an S-box may not be practical or may be substantially difficult. Hence, a series of simpler implementations may be used to approximate non-linearity. However, typical S-Boxes used in cryptographic applications may be substantially large, e.g., at least $6 \rightarrow 6$ and sometimes $8 \rightarrow 8$.

In the S-Box array 300, the S-Boxes 310 may be implemented using at least one of two choices, direct combinatorial logic and memory. Implementing a S-Box 310 using logic may have the advantage that the result (output) may be obtained substantially faster than using a memory lookup.

The disadvantage of using logic may be size. For instance, for relatively large S-Boxes, the number of gates needed in the S-Boxes may be substantial. If the result (output) is needed in a relatively short time, e.g., for time critical applications, relatively small S-Boxes may be needed. The substantially larger delays of a memory lookup implementation may be tolerated if a large S-Box is needed.

A substantially small S-Box that may provide non-linearity is a $3 \rightarrow 3$ S-Box, which may be used as one or more S-Boxes 310. Among a plurality of possible permutations, the following permutation function (and its isomorphic equivalents) may be selected:

$$[a, b, c] \xrightarrow[\text{(3-bit S-box)}]{\text{Permutation}} [Q_a, Q_b, Q_c]$$

$$\{0, 1, \ldots, 7\} \rightarrow \{1, 4, 7, 5, 2, 0, 3, 6\}$$

$$Q_a = \bar{a}b + \bar{a}c + bc$$

$$Q_b = ab + a\bar{c} + b\bar{c}$$

$$Q_c = \bar{a}b + \bar{a}\bar{c} + b\bar{c}$$

The hardware implementation (using gates) for the selected permutation is also shown above. The selected permutation function and the corresponding hardware implementation (using gates) for the selected permutation is also shown in FIG. 3. The S-Box 310 selected may provide a substantially good nonlinear property, including randomly distributed input, flipping any one bit or two bits, and flipping all three output bits with a probability of about 50 percent. However, when all three input bits are flipped at the same time, all three output bits may be flipped deterministically (and not randomly). In practice, the relatively complex $\bar{a}b + \bar{a}c + bc$ may be handled by one relatively large gate, the AOI222 gate shown in FIG 3. This gate may be about the same size as a 2-input XOR gate. Using this gate, the S-Box 310 may be implemented by only about three relatively large gates and about three inverters. Overall, the cost of a $3 \rightarrow 3$ S-Box array (S-Box array 300) may be a little larger than the cost of XOR arrays (XOR array 200). The S-Box array 300 may also comprise at least one $2 \rightarrow 2$ S-Box 310.

For comparison, an example of a $4 \rightarrow 4$ S-Box may be represented as follows:

$$Q_a \;=\; a\bar{b}\bar{c}d + \bar{a}b + \bar{a}c\bar{d} + bc$$

$$Q_b \;=\; a\bar{b}d + \bar{a}c\bar{d} + b\bar{c}$$

$$Q_c \;=\; a\bar{b}c + a\bar{b}d + \bar{a}b\bar{d} + \bar{a}c\bar{d} + bcd$$

$$Q_d \;=\; a\bar{b}c + \bar{a}b\bar{c} + ab\bar{d} + \bar{a}cd$$

This $4 \rightarrow 4$ S-box may achieve better non-linearity than the $3{\rightarrow}3$ S-Box, but may have substantially higher cost. The AOI2222 gates may be available in some standard cell libraries, but may not be capable to compute $Q_c$ above using a single large gate. A possible option for using larger S-Boxes (than $3{\rightarrow}3$ S-Boxes 310) may be to use multiple gates, which may result in substantially larger cost in area and timing. Using $3 \rightarrow 3$ S-Boxes 310 as building elements of the S-Box array 300 may be a trade-off between unit cost and mixing ability.

An arbitrary permutation of the state bits at each stage may be desired. Ideally, using an arbitrary 128-bit P-Box to achieve permutation between the hash function architecture stages (e.g., stages 110) may be desirable. However, this may require more space or room than may be available (e.g., on a chip). With a relatively long or wide data path, the distance from one end (first stage) to the other (last stage) may be substantial in terms of wire delay. Implementing arbitrary permutations of the input bits may also be difficult due to the cost of crossing wires between the stages. As integrated circuits are constructed in layers, in order to swap two wires, vertical connections vertically across layers may be needed. Laying out an arbitrary permutation in silicon requires substantially more area than just connecting straight through from one set of gates to the next. By constraining permutation in the hash function architecture, a relatively good quality permutation may be achieved without having substantial cost.

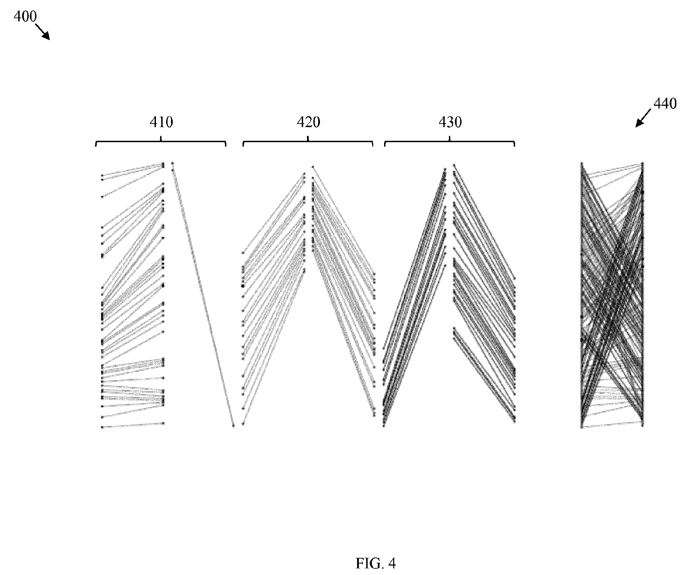

In an embodiment, to limit crossing wire cost (between stages), input wires may be randomly assigned at each stage to a plurality of groups, e.g., using the same number of input and output wires per group. Within a group (per stage), one input point (input bit corresponding to a stage) may be randomly connected to an output point (output bit corresponding to a previous stage), and the next input point to the next output point, until all points are covered. Continuing in this manner, the set of input bits may be rotated (redirected or reshuffled) in the corresponding group to the output bits in that group. Doing this for each group may require two layers per group, e.g., one layer for the wires where bits shift down and another layer for the wires where bits shift up. FIG. 4 illustrates a 3-group permutation scheme 400, which may be implemented between each stage of the hash function architecture 100. The 3-group permutation scheme 400 may comprise a first rotation 410, a second rotation 420, and a third rotation 430 that correspond to three groups. The three rotations are shown in separate layers. The real combined permutation 440 resulting from the combination of the three rotations is also shown. In some embodiments, about two levels of such permutations may be used per stage.

Typically, cryptographic hash functions may implement some pre-processing of a hash key to make it more difficult for an adversary to force collisions. For example, in a plurality of currently used hash functions, the length of the input may be appended to the input itself, e.g., as part of the final block, which may be referred to sometimes as "whitening". The hash function architecture 100 may not comprise the whitening step. However, in some embodiments, the whitening step may be included in the architecture or excluded as part of the cost/benefit trade-off in implementation. One feature of the hash function architecture 100 may be to provide a result (or output) with fewer bits than the input values or input bits. This may be achieved using a non-invertible final step or stage. If good mixing is achieved in the stages up to the final stage, all of the resulting output bits may be equally important. Thus selecting any set of the resulting output bits may be about equally good. A more complicated final step may be used in cryptographic hash functions to obscure the internal state. Such final step may not be included in the hash function architecture 100 to reduce cost. In an adversarial environment, the hash function architecture may be strengthened or better secured using a post processor to hide the internal state or details.

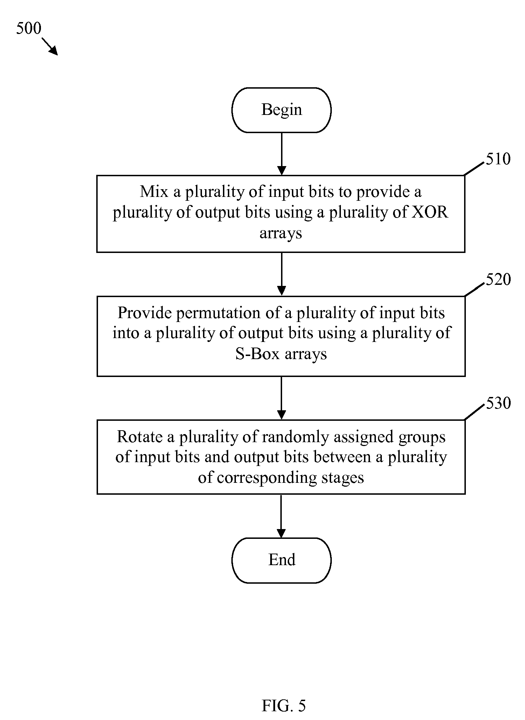

FIG. 5 illustrates an embodiment of a hash function method 500, which may be implemented using the hash function architecture 100. The hash function method 500 may be implemented to achieve improved randomness at a substantial low cost (e.g., hardware cost). At block 510, a plurality of input bits may be mixed to provide a plurality of output bits using a plurality of XOR arrays. The output bits may carry a plurality of values for mixing a plurality of corresponding combinations of values in the input bits. The XOR arrays may be arranged in sequence, e.g., consecutively, separated by S-Box arrays, or both, as described in the hash function architecture 100. At block 520, permutation of a plurality of input bits into a plurality of output bits may be provided using a plurality of S-Box arrays. The S-Box arrays may provide non-linear mixing for the input bits into the output bits. This may cause a relatively good avalanche property.

The S-Box arrays may be arranged in sequence, e.g., consecutively, separated by XOR arrays, or both, as described in the hash function architecture 100. The number of S-Box arrays may be less than the number of XOR arrays. At block 530, a plurality of randomly assigned groups of input bits and output bits may be rotated between a plurality of corresponding stages, e.g., to achieve sufficient permutation and limit the layers needed for rotation and thus limit the size and cost of implementation. For example, about three groups may be rotated per stage, which may require about two layers. The method 500 may be implemented until all stages of the hashing architecture are covered and then may end.

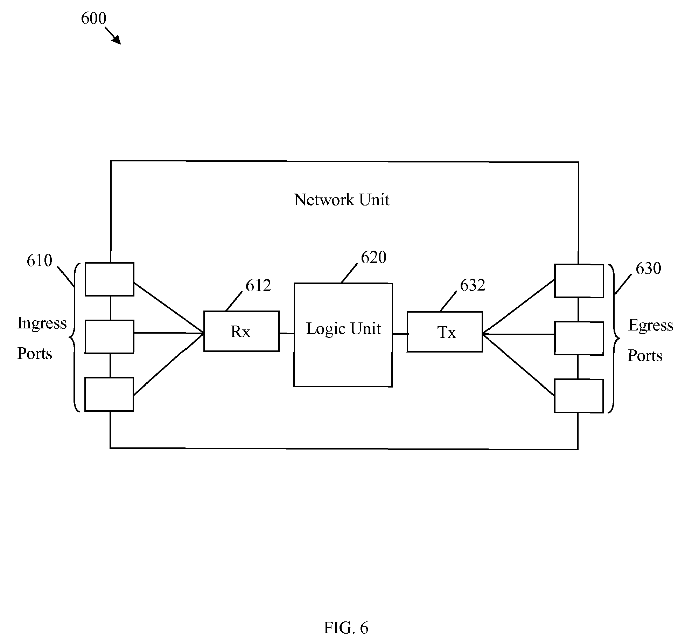

FIG. 6 illustrates an embodiment of a network unit 600, which may be located in a network or any component communicating with or within a network. The network unit 600 may be any device that transports data through the network or exchanges data with the network. For instance, the network unit 600 may be a network associated router or server. The network unit 600 may comprise one or more ingress ports or units 610 coupled to a receiver (Rx) 612 for receiving signals and frames/data from other network components. The network unit 600 may comprise a logic unit 620 to determine which network components to send data to. The logic unit 620 may be implemented using hardware, software, or both. The network unit 600 may also comprise one or more egress ports or units 630 coupled to a transmitter (Tx) 632 for transmitting signals and frames/data to the other network components. The receiver 612, logic unit 620, and transmitter 632 may also implement or support the hash function method 500 and the hash function architecture 100. For instance, the network unit 600 or the logic unit 620 may comprise the hash function architecture 100. The components of the network unit 600 may be arranged as shown in FIG. 6.

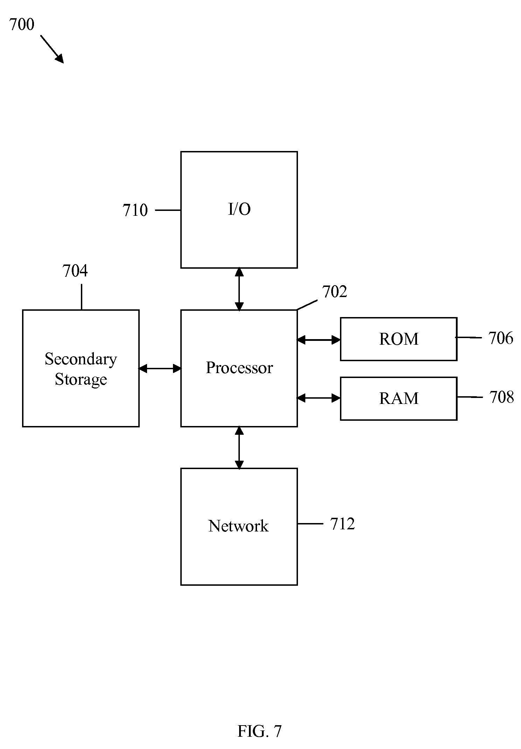

The network components described above may be implemented on any general-purpose network component, such as a computer or network component with sufficient processing power, memory resources, and network throughput capability to handle the necessary workload placed upon it. FIG. 7 illustrates a typical, general-purpose network component 700 suitable for implementing one or more embodiments of the components disclosed herein. The network component 700 includes a processor 702 (which may be referred to as a central processor unit or CPU) that is in communication with memory devices including secondary storage 704, read only memory (ROM) 706, random access memory (RAM) 708, input/output (I/O) devices 710, and network connectivity devices 712. The processor 702 may be implemented as one or more CPU chips, or may be part of one or more application specific integrated circuits (ASICs) and/or digital signal processors (DSPs).

The secondary storage 704 is typically comprised of one or more disk drives or erasable programmable ROM (EPROM) and is used for non-volatile storage of data. Secondary storage 704 may be used to store programs that are loaded into RAM 708 when such programs are selected for execution. The ROM 706 is used to store instructions and perhaps data that are read during program execution. ROM 706 is a non-volatile memory device that typically has a small memory capacity relative to the larger memory capacity of secondary storage 704. The RAM 708 is used to store volatile data and perhaps to store instructions. Access to both ROM 706 and RAM 708 is typically faster than to secondary storage 704.

**Claims**

1.   An apparatus comprising:

a plurality of stages that are coupled in series and configured to implement a hash function,
wherein the stages comprise a plurality of XOR arrays and one or more Substitution-Boxes (S-Boxes) that comprise a plurality of parallel gates;
the plurality of XOR (200) arrays are configured to mix a plurality of input bits to provide a plurality of output bits and to implement a linear mixing function of the input bits into the output bits as a stage of a non-cryptographic hash function,
the plurality of S-Box arrays (300) that are coupled in series with the XOR arrays in a non-cryptographic hash function architecture are configured to implement a permutation and non-linear mixing function of input bits from the plurality of XOR arrays into output bits as a stage of the non-cryptographic hash function,
**characterized in that**,
a plurality of randomly assigned groups of input bits and output bits are rotated between a plurality of corresponding stages.

2.   The apparatus of claim 1, wherein a first stage of the stages is coupled to the plurality of input bits, and wherein a last stage of the stages is coupled to the plurality of output bits.

3.   The apparatus of claim 2, wherein the number of output bits is less than the number of input bits.

4.   The apparatus of claim 3, wherein the number of input bits is in the range of 1 to 10,000, and wherein the number of output bits is in the range of 1 to 10,000.

**5.** The apparatus of claim 1, wherein the hash function is a non-cryptographic general-purpose hash function.

**6.** The apparatus of claim 1, wherein there is no feedback from one of the plurality of stages to a previous one of the plurality of stages.

**7.** The apparatus of claim 4, wherein the input bits and output bits between each two stages in the stages may be grouped randomly into a plurality of rotation groups, wherein the rotation groups comprise wires for routing between the input bits and the output bits, and wherein each of the rotation groups may comprise about two layers of routed wires between the two stages.

**8.** The apparatus of claim 7, where the number of rotation groups may be equal to about three.

**9.** The apparatus of claim 8, where about two levels of the about three rotation groups may be implemented between each of the two stages.

**10.** A method implemented by an apparatus comprising:

mixing, (510), a plurality of input bits to provide a plurality of output bits using a plurality of XOR arrays that are coupled in series in a non-cryptographic hash function architecture; and
providing, (520), a permutation of a plurality of input bits into a plurality of output bits using a plurality of S-Box arrays that are coupled in series with the XOR arrays in a non-cryptographic hash function architecture;
**characterized in that** the method further comprises:

rotating, (530), a plurality of randomly assigned groups of input bits and output bits between a plurality of corresponding stages in the non-cryptographic hash function architecture that corresponds to the XOR arrays and the S-Box arrays.

**Patentansprüche**

**1.** Einrichtung, die umfasst:

eine Vielzahl von Stufen, die in Reihe gekoppelt sind und so ausgebildet sind, dass sie eine Hash-Funktion implementieren,
wobei die Stufen eine Vielzahl von XOR-Arrays und eine oder mehrere Substitutions-Boxen (S-Boxen) umfassen, die eine Vielzahl von parallelen Gates umfassen;
die Vielzahl von XOR- (200) Arrays so ausgebildet sind, dass sie eine Vielzahl von Eingangsbits mischen, um eine Vielzahl von Ausgangsbits bereitzustellen und eine lineare Mischfunktion der Eingangsbits in die Ausgangsbits als Stufe einer nichtkryptografischen Hash-Funktion zu implementieren,
die Vielzahl von S-Box-Arrays (300), die in einer nichtkryptografischen Hash-Funktions-Architektur mit den XOR-Arrays in Reihe gekoppelt sind, so ausgebildet sind, dass sie eine Permutation und eine nichtlineare Mischfunktion von Eingangsbits aus der Vielzahl von XOR-Arrays in Ausgangsbits als Stufe der nichtkryptografischen Hash-Funktion implementieren,
**dadurch gekennzeichnet, dass**
eine Vielzahl von willkürlich zugeordneten Gruppen von Eingangsbits und Ausgangsbits zwischen einer Vielzahl von entsprechenden Stufen rotiert werden.

**2.** Einrichtung nach Anspruch 1, wobei eine erste Stufe der Stufen mit der Vielzahl von Eingangsbits gekoppelt ist und wobei eine letzte Stufe der Stufen mit der Vielzahl von Ausgangsbits gekoppelt ist.

**3.** Einrichtung nach Anspruch 2, wobei die Anzahl von Ausgangsbits kleiner ist als die Anzahl von Eingangsbits.

**4.** Einrichtung nach Anspruch 3, wobei die Anzahl von Eingangsbits im Bereich von 1 bis 10.000 liegt und wobei die Anzahl von Ausgangsbits im Bereich von 1 bis 10.000 liegt.

**5.** Einrichtung nach Anspruch 1, wobei die Hash-Funktion eine nichtkryptografische Universal-Hash-Funktion ist.

**6.** Einrichtung nach Anspruch 1, wobei es kein Feedback von einer der Vielzahl von Stufen zu einer vorherigen der Vielzahl von Stufen gibt.

**7.** Einrichtung nach Anspruch 4, wobei die Eingangsbits und Ausgangsbits zwischen jeweils zwei Stufen in den Stufen willkürlich zu einer Vielzahl von Rotationsgruppen gruppiert sein können, wobei die Rotationsgruppen Drähte zum Führen der Eingangsbits und der Ausgangsbits umfassen und wobei jede der Rotationsgruppen ungefähr zwei Schichten von geführten Drähten zwischen den zwei Stufen umfassen kann.

**8.** Einrichtung nach Anspruch 7, wobei die Anzahl von Rotationsgruppen gleich ungefähr drei sein kann.

**9.** Einrichtung nach Anspruch 8, wobei ungefähr zwei Ebenen der ungefähr drei Rotationsgruppen zwischen jeder der zwei Stufen implementiert sein können.

**10.** Verfahren, das von einer Einrichtung implementiert wird und umfasst:

Mischen (510) einer Vielzahl von Eingangsbits zum Bereitstellen einer Vielzahl von Ausgangsbits unter Verwendung einer Vielzahl von XOR-Arrays, die in einer nichtkryptografischen Hash-Funktions-Architektur in Reihe gekoppelt sind; und
Vorsehen (520) einer Permutation einer Vielzahl von Eingangsbits in eine Vielzahl von Ausgangsbits unter Verwendung einer Vielzahl von S-Box-Arrays, die in einer nichtkryptografischen Hash-Funktions-Architektur mit den XOR-Arrays in Reihe gekoppelt sind;
**dadurch gekennzeichnet, dass** das Verfahren ferner umfasst:

Rotieren (530) einer Vielzahl von willkürlich zugeordneten Gruppen von Eingangsbits und Ausgangsbits zwischen einer Vielzahl von entsprechenden Stufen in der nichtkryptografischen Hash-Funktions-Architektur, die den XOR-Arrays und den S-Box-Arrays entspricht.

**Revendications**

**1.** Appareil comprenant :

une pluralité de niveaux qui sont couplés en série et configurés pour mettre en oeuvre une fonction de hachage, les niveaux comportant une pluralité de matrices XOR et une ou plusieurs boîtes de substitution (S-Boxes) qui comprennent une pluralité de portes parallèles ;
la pluralité de matrices XOR (200) sont configurées pour mélanger une pluralité de bits d'entrée pour fournir une pluralité de bits de sortie et pour mettre en oeuvre une fonction de mélange linéaire des bits d'entrée dans les bits de sortie comme une étape d'une fonction de hachage non cryptographique,
la pluralité de matrices S-Box (300) qui sont couplées en série avec les matrices XOR dans une architecture de fonction de hachage non cryptographique sont configurées pour mettre en oeuvre une permutation et une fonction de mélange non linéaire de bits d'entrée à partir de la pluralité de matrices XOR dans des bits de sortie comme une étape de la fonction de hachage non cryptographique,
**caractérisé en ce que**,
une pluralité de groupes affectés aléatoirement de bits d'entrée et de bits de sortie font l'objet d'une rotation entre une pluralité d'étapes correspondantes.

**2.** Appareil selon la revendication 1, dans lequel un premier niveau des niveaux est couplé à la pluralité de bits d'entrée, et un dernier niveau des niveaux est couplé à la pluralité de bits de sortie.

**3.** Appareil selon la revendication 2, dans lequel le nombre de bits de sortie est inférieur au nombre de bits d'entrée.

**4.** Appareil selon la revendication 3, dans lequel le nombre de bits d'entrée est dans la gamme de 1 à 10.000, et le nombre de bits de sortie est dans la gamme de 1 à 10.000.

**5.** Appareil selon la revendication 1, dans lequel la fonction de hachage est une fonction de hachage à usage général non cryptographique.

**6.** Appareil selon la revendication 1, dans lequel il n'y a pas de rétroaction depuis un de la pluralité de niveaux jusqu'à un niveau précédent de la pluralité de niveaux.

7. Appareil selon la revendication 4, dans lequel les bits d'entrée et les bits de sortie entre chaque deux étapes dans les étapes peuvent être groupés aléatoirement en une pluralité de groupes de rotation, les groupes de rotation comprenant des fils pour un routage entre les bits d'entrée et les bits de sortie, et chacun des groupes de rotation pouvant comporter environ deux couches de fils routés entre les deux étapes.

8. Appareil selon la revendication 7, dans lequel le nombre de groupes de rotation peut être égal à environ trois.

9. Appareil selon la revendication 8, dans lequel environ deux niveaux des environ trois groupes de rotation peuvent être mis en oeuvre entre chacune des deux étapes.

10. Procédé mis en oeuvre par un appareil comprenant les étapes suivantes :

mélanger, (510), une pluralité de bits d'entrée pour fournir une pluralité de bits de sortie en utilisant une pluralité de matrices XOR qui sont couplées en série dans une architecture de fonction de hachage non cryptographique ; et

fournir, (520), une permutation d'une pluralité de bits d'entrée en une pluralité de bits de sortie en utilisant une pluralité de matrices S-Box qui sont couplées en série avec les matrices XOR dans une architecture de fonction de hachage non cryptographique ;
**caractérisé en ce que** le procédé comprend en outre :

permuter, (530), une pluralité de groupes affectés aléatoirement de bits d'entrée et de bits de sortie entre une pluralité d'étapes correspondantes dans l'architecture de fonction de hachage non cryptographique qui correspond aux matrices XOR et aux matrices S-Box.

FIG. 1

200

210

Input [0] ——→ Output [0]

210

Input [1] ——→ Output [1]

210

Input [2] ——→ Output [2]

210

Input [3] ——→ Output [3]

210

Input [n-1] ——→ Output [n-1]

*One stage of XOR Arrays*

$$Y = \begin{bmatrix} 1 & & 1 & & \ldots & & & 1 \\ 1 & 1 & & & \ldots & & & \\ & 1 & 1 & & \ldots & & & \\ & & 1 & 1 & \ldots & & & \\ & & & \cdots\cdots\cdots & & & \\ & & & & \ldots & 1 & 1 & \\ & & & & \ldots & & 1 & 1 \end{bmatrix} X$$

*The Matrix representation of One stage of XOR Arrays*

FIG. 2

300

3->3
S-Block

310

3->3
S-Block

310

3->3
S-Block

310

3->3
S-Block

310

2->2
S-Block

310

*(since 128=3x42+2)*

$$[a, b, c] \xrightarrow[(3-bit\ S-box)]{Permutation} [Q_a, Q_b, Q_c]_{10}$$

$$(\{0, 1, \ldots, 8\} \rightarrow \{1, 4, 7, 5, 2, 0, 3, 6\})$$

$$Q_a = \bar{a}b + \bar{a}c + bc$$

$$Q_b = ab + a\bar{c} + b\bar{c}$$

$$Q_c = \bar{a}b + \bar{a}c + b\bar{c}$$

AOI222                    OAI221

FIG. 3

FIG. 4

500

Begin

510

Mix a plurality of input bits to provide a
plurality of output bits using a plurality of XOR
arrays

520

Provide permutation of a plurality of input bits
into a plurality of output bits using a plurality of
S-Box arrays

530

Rotate a plurality of randomly assigned groups
of input bits and output bits between a plurality
of corresponding stages

End

FIG. 5

600

Network Unit

610

Ingress
Ports

612
Rx

620
Logic Unit

632
Tx

630

Egress
Ports

FIG. 6

700

710 — I/O

704

702

Secondary
Storage

Processor

ROM — 706

RAM — 708

Network — 712

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003086564 A1

**Non-patent literature cited in the description**

- AN FPGA IMPLEMENTATION AND PERFORMANCE EVALUATION OF THE SERPENT BLOCK CIPHER. **ELBIRT A J et al.** FPGA'00. ACM/SIGDA INTERNATIONAL SYMPOSIUM ON FIELD PROGRAMMABLE GATE ARRAYS. MONTEREY, CA, FEB. 9 - 11, 2000; [ACM/SIGDA INTERNATIONAL SYMPOSIUM ON FIELD PROGRAMMABLE GATE ARRAYS. ACM, 09 February 2000, vol. 8, 33-40